# EUROPÄISCHE PATENTANMELDUNG

(11) **EP 2 178 192 A2**
(43) Veröffentlichungstag der Anmeldung: **21.04.2010**
(21) Anmeldenummer: 09012844.8
(22) Anmeldetag: 10.10.2009
(51) Int. Cl.: H02K 9/22, H02K 11/00

(54) **An einem Elektromotor anordbares Gerät**

(30) Priorität: 14.10.2008 DE 102008051650
(71) Anmelder: KSB Aktiengesellschaft, 67227 Frankenthal (DE)
(72) Erfinder: Gontermann, Daniel, 67227 Frankenthal (DE)

(57) **Zusammenfassung**

Die vorliegende Erfindung betrifft einen auf einem mit einem Lüfter versehenen Elektromotor, insbesondere Normmotor mit an einer Stirnseite axial angeordnetem Lüfter, radial anordbares Gerät zur Steuerung und/oder Regelung mindestens eines Elektromotors, wobei zur Wärmeabfuhr des Geräts ein Kühlkörper vorgesehen ist.

Bei an dem Elektromotor angeordneten Gerät ist ein platten-, T- oder L-förmiger Kühlkörper (7, 17, 19) mit dem Gerät (2, 16) und gegebenenfalls dem Elektromotor (1) verbunden. Ein Abschnitt (8) des Kühlkörpers (7, 17, 19) ist vor einer Lüfteröffnung (15) des Elektromotors angeordnet (Fig.1).

## Beschreibung

Die Erfindung betrifft ein an einem mit einem Lüfter versehenen Elektromotor, insbesondere Normmotor mit an einer Stirnseite axial angeordnetem Lüfter, radial anordbares Gerät, wobei zur Wärmeabfuhr des Geräts ein Kühlkörper vorgesehen ist.

Bei einer Kreiselpumpenanordnung, die unter anderem aus ein oder mehreren Kreiselpumpen und/oder ein oder mehreren Elektromotoren und/oder ein oder mehreren Kreiselpumpenaggregaten besteht, sind zunehmend elektromechanische und/oder elektronische Geräte an der Kreiselpumpenanordnung anzubringen, anzuordnen oder zu befestigen. So ist es oft erforderlich zu kühlende Drehzahlregelgeräte, wie etwa Frequenzumrichter, an einen Elektromotor einer Kreiselpumpenanordnung anzuordnen, der einen oder mehrere Elektromotoren steuert und/oder regelt.

Für die Anordnung eines solchen zu kühlenden Geräts, insbesondere eines Frequenzumrichters, an einen Elektromotor wird bei im Handel erhältlichen Aggregaten, insbesondere bei Umrichtermotoren, entweder eine axiale oder eine radiale Aufbauweise umgesetzt.

Im Fall eines axialen Aufbaus wird der Umrichter in axialer Richtung am Motor angebracht. Durch die EP 0 619 432 A1 ist eine axiale Anordnung eines Drehzahlregelgeräts an einem Elektromotor bekannt. Die DE 103 61 748 A1 offenbart ein auf der Lüfterseite eines Elektromotors angeordnetes Anbaugehäuse für die Unterbringung von Elektronikbaugruppen. Bei beiden axialen Anordnungen weist ein Kühlkörper zur Lüfterseite hin Kühlrippen auf. Im Betrieb saugt der Lüfter durch die von den Kühlrippen gebildeten Strömungskanäle aus radialer Richtung Frischluft an und bläst sie in axialer Richtung über und durch den Motor. Durch die Strömungsumlenkung und den kleinen Ansaugbereich steht nicht genug Kühlluft zur Kühlung des Gerätes und des Elektromotors zur Verfügung. Die Kühlung des Motors wird stark beeinträchtigt und somit dessen maximale Wellenleistung reduziert. Derartige Anordnungen bauen zudem axial sehr lang und erfordern einen für einen axialen Aufbau vorgesehenen Umrichter.

Bei einem radialen Aufbau wird der Umrichter, der in einem separaten Gehäuse untergebracht ist, radial an dem Motor befestigt. Der Umrichter kann dabei eine autarke Kühlung aufweisen. Die Kühlung des Umrichters erfolgt alternativ mittels eines Motorwellenlüfters, wobei der seitlich am Motor sitzende Frequenzumrichter vom Luftstrom des Motorwellenlüfters partizipiert. Dazu kann beispielsweise ein Teil des Kühlluftstromes abgezweigt werden. Ein auf dem Motor aufgesetzter Umrichter widerspricht der Kompaktheit. Er baut in der Regel sehr hoch auf, was sich auf den Raumbedarf ungünstig auswirkt. Die Verwendung eines solchen Aufbaus in Kombination mit einer vertikal aufgestellten Kreiselpumpe, wirkt sich nachteilig auf die Standfestigkeit der Kreiselpumpenanordnung aus.

In der DE 10 2005 032 969 A1 wird nun versucht, einen radial aufgebauten Umrichtermotor dahingehend weiterzubilden, dass die dem Motor zugewandte Seite des Umrichtergehäuses unterschiedlich hohe Kühlrippen aufweist. Das Motorgehäuse ist mit Ausnahme der dem Umrichter zugewandten Seite berippt. Somit kann in diesem rippenfreien Bereich der Umrichter mit minimalem Abstand auf dem Motor angeordnet werden. Durch die unterschiedlich hohen Kühlrippen ist der Umrichter mit seinem Kühlkörper der Außenseite des Motors angepasst. Ein vom Lüfter erzeugter Luftstrom wird teilweise für die Kühlung des Kühlkörpers vom Umrichter verwendet. Bei dem verwendeten Motor handelt es sich nicht um einen handelsüblichen, mit Klemmenkasten versehenen Antriebsmotor. Ein handelsüblicher Motor ist über seinen vollen Umfang hinweg mit Kühlrippen versehen. Die Verwendung eines solchen handelsüblichen Motors oder eines Normmotors ist für viele Anwendungen mit Kreiselpumpenanordnungen eine unabdingbare Vorraussetzung.

Die DE 196 22 396 A1 offenbart einen Wechselstrommotor mit Frequenzumrichter zur Steuerung von dessen Motordrehzahl und/oder Motorleistung. Der Frequenzumrichter besitzt ein Trägerteil, das im montierten Zustand mit einer Lüfterhaube des Wechselstrommotors thermisch koppelbar oder selbst als Lüfterhaube ausgebildet ist. Bei den gezeigten axialen Anordnungen des Frequenzumrichters bestehen die bereits zuvor erwähnten Probleme von axialen Aufbauten. Bei einer in Figur 8 gezeigten radialen Anordnung wird die Lüfterhaube als Kühlkörper für das in einem modifizierten Motorklemmenkasten angeordnete Umrichtermodul verwendet. Eine unbedingt notwendige thermische Kopplung zwischen Umrichtermodul und der Lüfterhaube erfolgt über ein Wärmeleitrohr. Solche Wärmeleitrohre oder Heatpipes nutzen die Verdampfungswärme eines im Vakuum eingeschlossenen Stoffes. Bei einer Beschädigung verlieren sie ihre Funktionsfähigkeit. Die Integration des Umrichtermoduls in den Motorklemmenkasten erfordert eine aufwändige Modifikation desselben.

Der Erfindung liegt daher das Problem zu Grunde, ein eingangs genanntes, an einem Elektromotor anordbares Gerät derart weiterzubilden, dass unter Verwendung von Normmotoren und ohne deren Umbau ein kompakter Aufbau bei gleichzeitig guter Kühlwirkung für Gerät und Motor gegeben ist.

Die Lösung des Problems sieht vor, dass bei an dem Elektromotor angeordnetem Gerät ein platten-, T- oder L-förmiger Kühlkörper mit dem Gerät und gegebenenfalls dem Elektromotor verbunden ist und dass ein Abschnitt des Kühlkörpers vor einer Lüfteröffnung des Elektromotors angeordnet ist.

Der Kühlkörper überdeckt mit einem Abschnitt oder einem Schenkel ganz oder teilweise die Lüfteröffnung. Der Kühlkörper ragt in den Luftstrom des Lüfters hinein. Der Kühlkörper wird dadurch direkt vom Luftstrom gekühlt und die Kühlleistung wird direkt zum Gerät geleitet. Der Kühlkörper funktioniert als Wärmetauscher, der die innerhalb eines zu kühlenden Geräts beispielsweise durch leistungselektronische Komponenten entstehende Wärme an den Kühlluftstrom des Motorlüfters abführt. Eine separate Kühleinrichtung für das Gerät ist nicht erforderlich. Gegenüber den herkömmlichen Lösungen mit einer rein radialen Anordnung eines mit Kühlkörper versehenen Gerätes auf einem Elektromotor, weist die erfindungsgemäße Lösung den Vorteil eines kompakteren Aufbaus auf. Die Anordnung des Kühlkörperabschnitts erfolgt in einem axial zum Elektromotor gelegenen Bereich. Durch eine Mischung von radialer und axialer Bauweise wird ein radial erforderlicher Bauraum verringert. Zusätzlich ergeben sich durch die erfindungsgemäße Lösung konstruktiv ausgewogenere Gewichtsverhältnisse. Durch die Erfindung wird eine bessere Standfestigkeit bei geringerem Platzbedarf erreicht. Vorteilhaft ist dies insbesondere bei einer Aufstellung einer mit einem erfindungsgemäßen Gerät ausgestatteten Antriebsvorrichtung und/oder Kreiselpumpenanordnung, beispielsweise einem Kreiselpumpenaggregat mit einem motormontierten Frequenzumrichter.

Nach einer Ausgestaltung ragt der Abschnitt des Kühlkörpers zuluftseitig in den Luftstrom des Lüfters hinein. Durch die Anordnung des Kühlkörpers auf der Zuluftseite des Lüfters ist gewährleistet, dass ausreichend Kühlleistung zur Kühlung des Gerätes zur Verfügung steht, denn auf der Zuluftseite ist der Luftstrom noch nicht vom Elektromotor und dessen Abwärme erwärmt. Ein entscheidender Vorteil ist, dass ein Elektromotor in seinem konstruktiven Aufbau unverändert bleiben kann. Spezielle Anpassungen eines Elektromotors, um ein an demselben anzuordnendes Gerät zu kühlen, sind nicht erforderlich. Vielmehr kann ein solches Gerät einfach auf oder an dem Elektromotor angeordnet und/oder befestigt werden. Dies ist besonders für Anwendungen vorteilhaft, in denen ein handelsüblicher IEC-Normmotor ohne konstruktive Änderungen verwendet werden muss oder soll. Auch kann durch die Erfindung auf einfachste Weise ein zu kühlendes Gerät nachträglich an einem Elektromotor angeordnet oder befestigt werden.

Der in den Luftstrom des Lüfters hineinragende Wärmetauscher oder Kühlkörperabschnitt ist idealerweise derart gestaltet, dass der Kühlluftstrom des Lüfters nicht oder nur minimal gestört wird. Der Kühlkörperabschnitt weist dazu Aussparungen oder Durchströmöffnungen für den Durchtritt eines Luftstromes oder eines Kühlluftstromes auf. So ist der Lüfter aus axialer Richtung frei anströmbar. Die Aussparungen bewirken einen ungehinderten, freien Luftzustrom zum Lüfter. Die Aussparungen können dazu strömungsgünstig oder profiliert gestaltet sein. Die Anströmung erfolgt im Wesentlichen in gleicher Weise wie wenn kein Kühlkörper in den Luftstrom hineinragen würde. Eine Kühlung des Elektromotors durch den Kühlluftstrom des Lüfters bleibt erhalten.

Eine gute Kühlwirkung wird erreicht, wenn der Kühlkörperabschnitt in einer Hauptluftströmung des Lüfters angeordnet ist. Der Kühlkörperabschnitt wird mit seinen Aussparungen dabei so in den Luftstrom positioniert, dass ein größtmöglicher Bereich des Hauptluftstromes zur Kühlung des Kühlkörpers und damit des Geräts genutzt wird. Der Kühlkörper kann dabei den Bereich der Hauptluftströmung vollständig überdecken. Es ist ebenfalls vorgesehen, dass der Kühlkörper nur in Teilbereichen in den Hauptluftstrom hineinragt.

Eine hinsichtlich Materialaufwand günstige Variante ergibt sich, wenn der Kühlkörper an die Abmessungen des Motors und/oder dessen Lüftergehäuse angepasst ist. Ein dem Gerät abgewandtes Ende des Kühlkörpers kann dabei einen Kreisbogen bilden. Der Kühlkörper ist also so gestaltet, dass er zwar den Hauptluftstrom des Lüfters auszunutzen vermag, aber nicht in für eine Kühlung unwirksame Bereiche einer Nebenluftströmung hineinragt. Eine solche Gestaltung ist auch unter Designaspekten vorteilhaft.

Nach einer weiteren Ausgestaltung weist der Kühlkörper ein oder mehrere oberflächenvergrößernde Elemente auf. Dadurch entsteht eine größere gekühlte Oberfläche und die Kühlwirkung wird verstärkt. Der Kühlkörper kann Kühlrippen und/oder Lamellen aufweisen. Ebenfalls haben sich verschiedene Lochanordnungen als zweckmäßig erwiesen. Der Kühlkörper weist dabei gelochte Bereiche auf. Es ist vorgesehen, dass die oberflächenvergrößernden Elemente unterschiedlich lang sind. Die oberflächenvergrößernden Elemente sind im einfachsten Fall gerade ausgebildet, können aber auch bogenförmig und/oder mäanderförmig ausgebildet sein.

Der Kühlkörper kann mit ein oder mehreren Stirnseiten, einer Unterseite und/oder einer Oberseite des Geräts wärmeleitend verbunden sein. Ein besonders kompakter Aufbau wird erreicht, wenn der Kühlkörper einen rahmenartigen Abschnitt aufweist, in den das zu kühlende Gerät ganz oder teilweise eingebettet sein kann. Hierbei kann der Rahmen offen als eine Art Tasche ausgebildet sein, in der das Gerät angeordnet ist. Der Rahmen kann auch geschlossen ausgebildet sein und das Gerät umschließen.

Die Erfindung zielt auf Geräte zur Beeinflussung eines Elektromotors hinsichtlich Drehzahl und/oder Drehmoment. Wenngleich die Erfindung insbesondere bei leistungselektronischen Geräten, die einen hohen Kühlbedarf besitzen, Vorteile bietet, wird die Erfindung ganz allgemein von motormontierten elektromechanischen und/oder elektronischen Geräten genutzt.

Die Erfindung umfasst nicht nur das Gerät an sich, sondern schließt eine Antriebsvorrichtung mit einem mit einem Lüfter versehenen Elektromotor, insbesondere Normmotor mit an einer Stirnseite axial angeordnetem Lüfter, mit einem erfindungsgemäßen Gerät mit ein.

Ebenso liegt eine Kreiselpumpenanordnung bestehend aus mindestens einer Kreiselpumpe und mindestens einem Elektromotor, insbesondere Normmotor mit an einer Stirnseite axial angeordnetem Lüfter, gekennzeichnet durch mindestens eine erfindungsgemäße Antriebsvorrichtung im Rahmen der Erfindung. Hier spielen insbesondere die ausgewogenen Gewichtsverhältnisse der erfindungsgemäßen Antriebsvorrichtung eine große Rolle, da im Gegensatz zu herkömmlichen an Kreiselpumpen angeordneten Antriebsvorrichtungen die erfindungsgemäße Antriebsvorrichtung die Standfestigkeit einer vertikalen Kreiselpumpenanordnung nur geringfügig beeinflusst.

Ausführungsbeispiele der Erfindung sind in den Zeichnungen dargestellt und werden im Folgenden näher beschrieben. Es zeigen die
- Fig. 1: eine erste Ausführungsform mit einem L-förmigen Kühlkörper; die
- Fig. 2: eine zweite Ausführungsform mit einem T-förmigen Kühlkörper und die
- Fig. 3: eine dritte Ausführungsform mit einem plattenförmigen Kühlkörper.

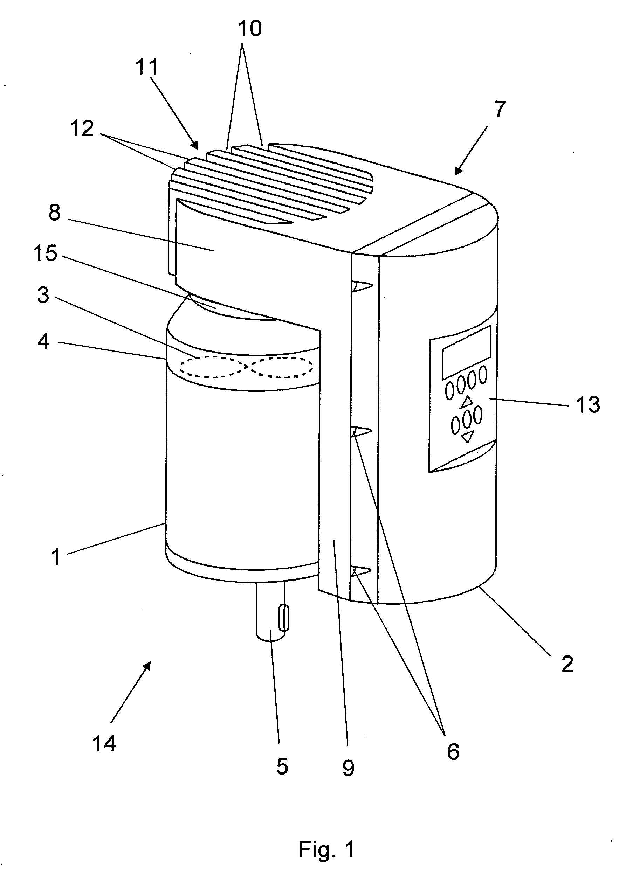

Die Fig. 1 zeigt einen Elektromotor 1 an dem ein elektromechanisches und/oder elektronisches Gerät 2 zur Steuerung und/oder Regelung desselben angeordnet ist. Bei dem Elektromotor 1 handelt es sich um einen IEC-Normmotor, der an einer Stirnseite einen axial angeordneten - hier gestrichelt dargestellten - Lüfter 3 in einem Lüftergehäuse 4 mit einer Lüfteröffnung 15 aufweist. Zur Verbindung mit einer hier nicht dargestellten Kreiselpumpenanordnung weist der Elektromotor 1 eine Welle 5 auf. Zur Wärmeabfuhr des Geräts 2 ist dieses mittels mehrerer Verbindungsstellen 6 wärmeleitend mit einem Kühlkörper 7 verbunden oder steht mit dem Kühlkörper 7 in wärmeleitender Verbindung. Der Kühlkörper 7 besteht aus wärmeleitendem Material, beispielsweise Aluminium. Der Kühlkörper 7 springt gegenüber dem Elektromotor 1 und dessen Lüfter 3 axial vor und ein Abschnitt 8 des Kühlkörpers 7 ragt in den Luftstrom des Lüfters 3 hinein. Der Kühlkörperabschnitt 8 ist axial vor der Lüfteröffnung 15 angeordnet. Der Kühlkörperabschnitt 8 wird direkt vom Luftstrom gekühlt und die Kühlleistung wird durch den wärmeleitenden Kühlkörperabschnitt 9 zum Gerät 2 geleitet. Dadurch dass die Anordnung des Kühlkörperabschnittes 8 in einem axial zum Elektromotor 1 gelegenen Bereich erfolgt, wird ein radial erforderlicher Bauraum verringert. Der Normmotor 1 bleibt konstruktiv unverändert.

Der Kühlkörperabschnitt 8 ragt zuluftseitig in den Kühlluftstrom des Lüfters 3 hinein. Durch eine solche Anordnung des Kühlkörperabschnittes 8 auf der Saugseite des Lüfters 3 ist gewährleistet, dass ausreichend Kühlleistung zur Kühlung des Gerätes 2 zur Verfügung steht, da auf der Zuluftseite der Luftstrom noch nicht vom Elektromotor 1 und dessen Abwärme erwärmt ist. Dabei wird der Zuluftstrom zum Lüfter 3 nur minimal gestört. Denn der Kühlkörperabschnitt 8 weist Aussparungen 10 auf, so dass der Lüfter 3 aus axialer Richtung frei anströmbar ist. Die Aussparungen 10 bewirken einen ungehinderten freien Luftzustrom zum Lüfter 3. Der Kühlkörperabschnitt 8 überdeckt einen Bereich der Hauptluftströmung des Lüfters 3. Dabei ist der Kühlkörperabschnitt 8 mit seinen Aussparungen 10 so in den Luftstrom positioniert, dass ein größtmöglicher Bereich des Hauptluftstromes zur Kühlung des Kühlkörpers 7 und des mit diesem wärmeleitend verbundenen Geräts genutzt wird. Der Kühlkörper 7 erstreckt sich mit seinem in den Kühlluftstrom des Lüfters hineinragenden Abschnitt 8 im Wesentlichen senkrecht zur Motorachse. Unter Designgesichtspunkten ist es von Vorteil, dass das dem Gerät 2 abgewandte Ende des Kühlkörperabschnitts 8 an die Abmessungen des Motors 2 und/oder dessen Lüftergehäuse 4 angepasst ist. In diesem Fall bildet das dem Gerät 2 abgewandte Ende des Kühlkörperabschnitts 8 einen Kreisbogen 11 aus. Der den Hauptluftstrom des Lüfters 3 überdeckende Kühlkörperabschnitt 8 des Kühlkörpers ist aus mehreren oberflächenvergrößernden Elementen, hier Kühlrippen 12, gebildet. Alternativ kann der Kühlkörperabschnitt 8 auch Lamellen aufweisen oder verschiedene Lochanordnungen, die beispielsweise durch ein oder mehrere runde oder ovale Bohrungen durch den Kühlkörper 7 entstehen. Die Kühlrippen 12 bewirken eine Vergrößerung der Kühloberfläche des Kühlkörperabschnittes 8 und verstärken dessen Kühlwirkung. In diesem Ausführungsbeispiel sind die Kühlrippen 12 gerade ausgebildet. Sie können aber auch bogenförmig und/oder mäanderförmig ausgebildet sein. In diesem Ausführungsbeispiel sind der Kühlkörperabschnitt 8 und der mit der Unterseite des Geräts 2 verbundene Abschnitt 9 einteilig ausgeführt. Erfindungsgemäß sind auch mehrteilige Ausführungen vorgesehen. Im Ausführungsbeispiel ist der Kühlkörper 7 als ein separates Bauteil ausgeführt. Alternativ kann der Kühlkörper 7 integral mit dem Gerät 2 verbunden sein.

Bei dem in Fig. 1 gezeigten Gerät 2 handelt es sich um ein Gerät zur Beeinflussung des Elektromotors 1 hinsichtlich Drehzahl und/oder Drehmoment. Auf dessen Oberseite befindet sich ein Anzeige- und/oder Bedienelement 13. Beispielsweise kann es sich bei dem Gerät 2 um einen motormontierten Frequenzumrichter handeln. Wenngleich die Erfindung insbesondere bei leistungselektronischen Geräten, die einen hohen Kühlbedarf besitzen, Vorteile bietet, wird die Erfindung ganz allgemein von motormontierten, elektromechanischen und/oder elektronischen Geräten genutzt. Der Kühlkörper 7 und/oder das Gerät 2 können auf oder an dem Elektromotor 1 mittels verschiedenartig gestalteter Haltevorrichtungen, die hier nicht dargestellt sind, angeordnet sein. Vorteilhaft ist beispielsweise eine Haltevorrichtung mit einem mit dem Gerät 2 verbindbaren oder verbundenen Aufnahmeelement, das elektrisch und/oder mechanisch eine Verbindung zum Gerät 2 herstellt. Das zu kühlende Gerät kann auch auf einem Motorklemmenkasten angeordnet sein.

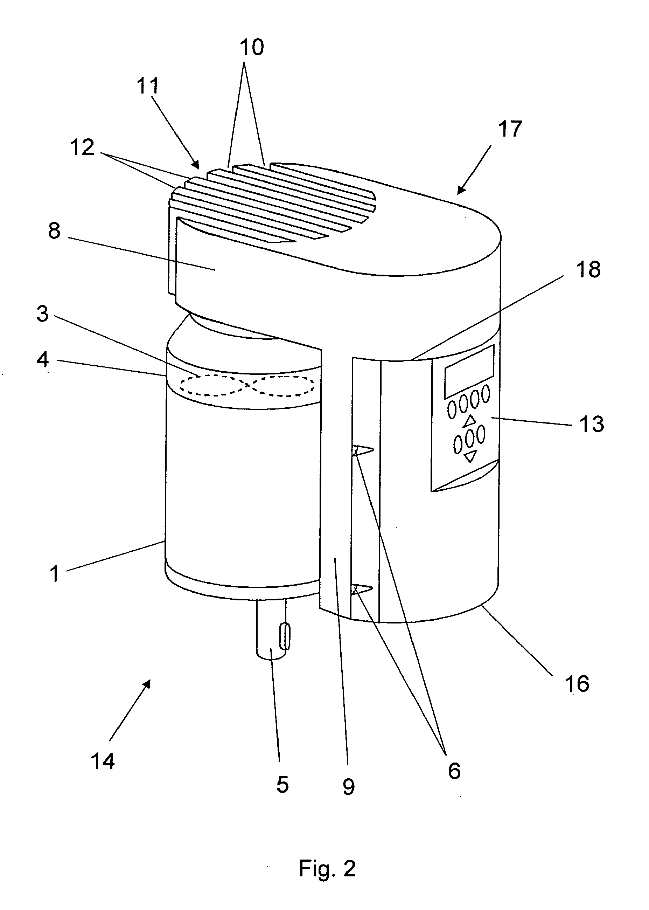

Die Fig. 2 zeigt den gleichen Elektromotor 1 mit einem erfindungsgemäßen Gerät 16, das mit einem T-förmigen Kühlkörper 17 verbunden ist. Bei diesem Ausführungsbeispiel können nicht nur an einer Unterseite des Gerätes, sondern auch an einer dem Kühlkörper 17 zugewandten Stirnseite 18 des Gerätes 16 zu kühlende Bauteile angeordnet werden.

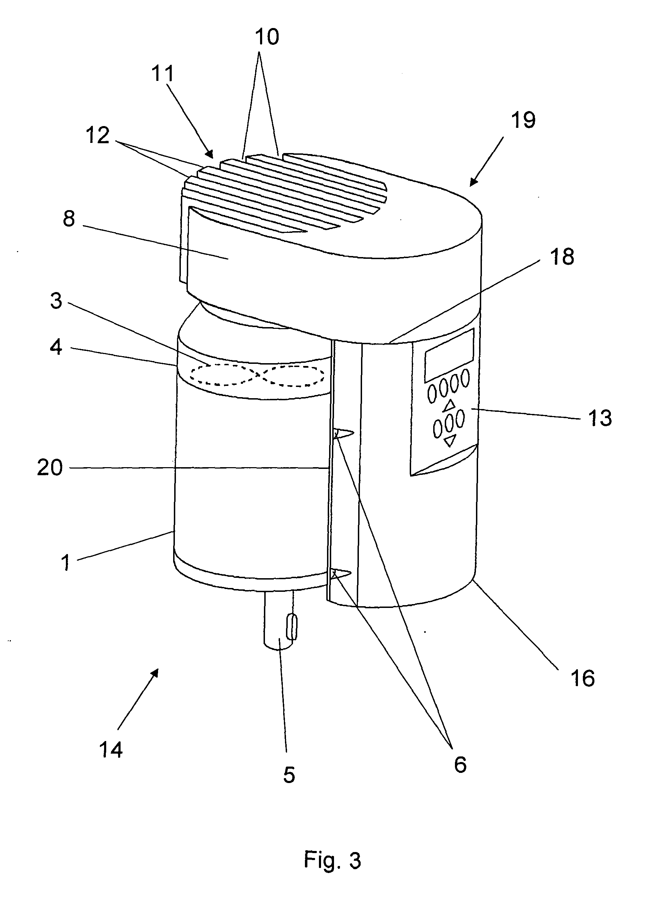

Die Fig. 3 zeigt eine weitere erfindungsgemäße Ausführungsform. Ein Gerät 16 ist hier an dessen Stirnseite 18 mit einem plattenförmigen Kühlkörper 19 verbunden. Das Gerät 2 ist mit einem Aufnahmeelement 20 verbunden, das eine elektrische und/oder mechanische Verbindung zum Gerät 2 herstellt. Das Aufnahmeelement 20 ist über - hier nicht dargestellte - Halteelemente am Elektromotor 1 oder dessen Motorklemmenkasten befestigt.

Bei den gezeigten Anordnungen ist ein erfindungsgemäßes Gerät an einem Elektromotor 1 angeordnet. Die Figuren zeigen also jeweils auch eine erfindungsgemäße Antriebsvorrichtung 14. Allen Ausführungen gemeinsam ist die winklig oder im Winkel zur Drehachse des Motors und im Winkel zur Längsachse des Gerätes 16 verlaufende Anordnung des Kühlkörperabschnitts 8 am angegebenen Ort. Infolge dessen bedarf es keiner konstruktiven Änderung des Elektromotors 1. Im Gegenteil, mit dieser Lösung können erstmals auch bereits in Anlagen installierte Motoren nachträglich und in einfachster Weise fallweise nach- oder umgerüstet werden.

Weiterhin liegt eine Kreiselpumpenanordnung bestehend aus mindestens einer Kreiselpumpe und mindestens einem Elektromotor, insbesondere Normmotor mit an einer Stirnseite axial angeordnetem Lüfter, mit einer solchen Antriebsvorrichtung im Rahmen der Erfindung. Im Gegensatz zu herkömmlichen an Kreiselpumpen angeordneten Antriebsvorrichtungen verbessert die erfindungsgemäße Antriebsvorrichtung 14, angebracht an einer vertikal aufgestellten Kreiselpumpenanordnung, deren Standfestigkeit.

## Patentansprüche

1. An einem mit einem Lüfter versehenen Elektromotor, insbesondere Normmotor mit an einer Stirnseite axial angeordnetem Lüfter, radial anordbares Gerät, wobei zur Wärmeabfuhr des Geräts ein Kühlkörper vorgesehen ist,
**dadurch gekennzeichnet, dass**
ein platten-, T- oder L-förmiger Kühlkörper (7, 17, 19) mit dem Gerät (2, 16) und gegebenenfalls dem Elektromotor (1) verbunden ist und dass ein Abschnitt (8) des Kühlkörpers (7, 17, 19) vor einer Lüfteröffnung (15) des Elektromotors (1) angeordnet ist.

2. Gerät nach Anspruch 1, **dadurch gekennzeichnet, dass** der Abschnitt (8) des Kühlkörpers (7, 17, 19) zuluftseitig in den Luftstrom des Lüfters (3) hineinragt.

3. Gerät nach Anspruch 1 oder 2, **dadurch gekennzeichnet, dass** der Kühlkörperabschnitt (8) Aussparungen (10) für den Durchtritt des Luftstromes aufweist.

4. Gerät nach Anspruch 3, **dadurch gekennzeichnet, dass** der Kühlkörperabschnitt (8) in einer Hauptluftströmung des Lüfters (3) angeordnet ist.

5. Gerät nach einem der Ansprüche 1 bis 4, **dadurch gekennzeichnet, dass** der Kühlkörper (7, 17, 19) an die Abmessungen des Motors (1) und/oder dessen Lüftergehäuse (4) angepasst ist.

6. Gerät nach einem der Ansprüche 1 bis 5, **dadurch gekennzeichnet, dass** der Kühlkörper (7, 17, 19) ein oder mehrere oberflächenvergrößernde Elemente (12) aufweist.

7. Gerät nach Anspruch 6, **dadurch gekennzeichnet, dass** die oberflächenvergrößernden Elemente (12) unterschiedlich lang sind.

8. Gerät nach Anspruch 6 oder 7, **dadurch gekennzeichnet, dass** die oberflächenvergrößernden Elemente (12) gerade ausgebildet sind.

9. Gerät nach Anspruch 6, 7 oder 8, **dadurch gekennzeichnet, dass** die oberflächenvergrößernden Elemente (12) bogenförmig oder mäanderförmig ausgebildet sind.

10. Gerät nach einem der Ansprüche 1 bis 9, **dadurch gekennzeichnet, dass** der Kühlkörper (7, 17, 19) mit ein oder mehreren Stirnseiten (18), mit einer Unterseite und/oder einer Oberseite des Geräts (2, 16) wärmeleitend verbunden ist.

11. Gerät nach einem der Ansprüche 1 bis 10, **dadurch gekennzeichnet, dass** ein dem Gerät (2, 16) zugewandter Abschnitt (9) des Kühlkörpers (7, 17, 19) rahmenartig gestaltet ist.

12. Antriebsvorrichtung mit einem mit einem Lüfter versehenen Elektromotor, insbesondere Normmotor mit an einer Stirnseite axial angeordnetem Lüfter, **gekennzeichnet durch** ein Gerät (2, 16) nach einem der Ansprüche 1 bis 11.

13. Kreiselpumpenanordnung, bestehend aus mindestens einer Kreiselpumpe und mindestens einem Elektromotor, insbesondere Normmotor mit an einer Stirnseite axial angeordnetem Lüfter, **gekennzeichnet durch** mindestens eine Antriebsvorrichtung (14) nach Anspruch 12.
